# EUROPÄISCHE PATENTSCHRIFT

(11) **EP 1 058 705 B1**
(45) Veröffentlichungstag und Bekanntmachung des Hinweises auf die Patenterteilung: **30.01.2002**
(21) Anmeldenummer: 99907560.9
(22) Anmeldetag: 22.02.1999
(51) Int. Cl.: C08G 69/20, C08G 69/18

(54) **VERFAHREN ZUR HERSTELLUNG VON POLYAMIDEN**
METHOD FOR PRODUCING POLYAMIDES
PROCEDE POUR PRODUIRE DES POLYAMIDES

(30) Priorität: 26.02.1998 DE 19808190
(43) Veröffentlichungstag der Anmeldung: 13.12.2000
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE); PIPPER, Gunter, D-67098 Bad Dürkheim (DE); FUCHS, Eberhard, D-67227 Frankenthal (DE)
(74) Vertreter: Isenbruck, Günter
(86) Internationale Anmeldenummer: EP9901135
(87) Internationale Veröffentlichungsnummer: WO9943735

(56) Entgegenhaltungen:
- EP-A- 0 462 476
- DD-A- 280 766
- DE-A- 2 554 788

## Beschreibung

Die Erfindung betrifft ein Verfahren zur Herstellung von Polyamiden durch Polymerisation von Lactamen in Gegenwart von Metalloxiden als Heterogen-Katalysatoren.

Die hydrolytische Polymerisation gehört zu den wichtigsten Verfahren zur Herstellung von Polyamiden aus Lactamen. Bekanntlich können dabei saure Katalysatoren die Lactampolymerisation beschleunigen.

So hat zum Beispiel der Einsatz mono- und bifunktioneller Säuren bei der hydrolytischen Polymerisation von Caprolactam zur Kettenregelung den Vorteil, daß die Raum-Zeit-Ausbeute - verglichen mit basisch geregeltem Polyamid - verbessert werden kann. EP-A 0 462 476 betrifft den Einsatz von Dicarbonsäuren bei der Polyamid 6-Herstellung. Saure Verbindungen, wie Terephthalsäure, Adipinsäure oder Isophthalsäure, reagieren jedoch mit den Aminoendgruppen der entstehenden Polymerketten und haben somit entscheidenden Einfluß auf die Zahl der für die Kondensation zur Verfügung stehenden Endgruppen und auf die Geschwindigkeit der Polykondensation. Die einsetzbare Menge reaktiver saurer Regler ist deshalb durch das angestrebte Endmolekulargewicht und die benötigte Raum-Zeit-Ausbeute bei der Kondensation in der Schmelze und in der festen Phase beschränkt.

Nachteilig bei der Verwendung saurer, kondensationsfähiger Regler ist neben der Verkleinerung der Raum-Zeit-Ausbeute der Polymerisation die Verringerung der Aminoendgruppenzahl und somit die Verschlechterung der Färbeeigenschaften von Polyamiden und insbesondere von Polyamidfasern, da Aminoendgruppen bei zahlreichen Anwendungen maßgeblich zur Anbindung von Farbstoffen an das Polymer beitragen.

GB-B 1 148 508 schlägt die Zugabe von sauren Salzen, wie TiCl₂, AlCl₃, SiCl₄ und FeCl₃, zur Reaktionsmischung vor, um die hydrolytische Polymerisation zu beschleunigen.

In DE-C 2 554 788 wird der Einsatz der Metalloxide TiO₂, V₂O₅, CrO₃, MnO₂, CuO, CuO₂, CoO₃, MoO₃ und WO₃ in feinverteilter Form als Katalysatoren, gegebenenfalls unter zusätzlicher Einwirkung ionisierender Strahlung, genannt, wobei die in einer Menge von 0.1 bis 50 Gew.-% eingesetzten Katalysatoren mit der Polymerschmelze aus dem Reaktor ausgetragen werden und im Polymer verbleiben. Die Nachteile des Einsatzes der oben genannten Salze und Metalloxide hängen vom Katalysatortyp ab: So können Verfärbungen des Endproduktes ebenso wie eine starke Verschlechterung der mechanischen und rheologischen Eigenschaften des Polymers auftreten. Es ist zudem bekannt, daß die Verschlechterung des Eigenschaftsprofils der Polymere bei Spinnanwendungen sich schon bei sehr niedrigen Katalysator- bzw. Füllstoffkonzentrationen bemerkbar macht.

In DD 280 766 wird der Einsatz eines Katalysatorsystems aus Calciumcarbonat, Bariumsulfat und TiO₂ vorgeschlagen, welches mit einem Kieselgelestergemisch beschichtet ist, um eine Verfarbung des Endproduktes zu verhindern Auch in diesem Fall verbleibt der Katalysator in einer Menge von 2 bis 10 Gew.-% im Produkt, was sich wiederum insbesondere bei Spinnanwendungen negativ auf die Verarbeitungs- und Produkteigenschaften auswirkt.

Des weiteren muß im Fall des Einsatzes sämtlicher oben genannter Katalysatoren oder Katalysatormischungen, die Metalloxide enthalten und im Endprodukt verbleiben, von einer vergleichsweise starken Licht- und Wärmeinstabilität ausgegangen werden, da unbeschichtete, reaktive Metalloxide bekanntlich eine ausgeprägte photokatalytische Wirkung zeigen und die Degradation des Polymers beschleunigen.

Der Erfindung liegt die Aufgabe zugrunde, ein Verfahren zur Herstellung von Polyamiden aus Lactamen bereitzustellen, welches die Raum-Zeit-Ausbeute und die Wirtschaftlichkeit der Polymerisation verbessert, ohne die oben genannten Produkt- und Verarbeitungseigenschaften negativ zu beeinflussen.

Die Aufgabe wird erfindungsgemäß gelöst durch ein Verfahren zur Herstellung von Polyamiden durch Polymerisation von Lactamen in Gegenwart von Metalloxiden als Heterogen-Katalysator, bei dem die Metalloxide in einer Form eingesetzt werden, die die mechanische Abtrennung aus dem Reaktionsgemisch erlaubt, und im Verlauf oder nach Ende der Polymerisation aus dem Reaktionsgemisch entfernt werden. Dabei werden die Katalysatoren in Form von Granulaten, Strängen, Festbetten oder mit Katalysator beschichteten Füllkörpern sowie mit Katalysator beschichteten Einbauten eingesetzt.

Es wurde gefunden, daß der Einsatz von Metalloxiden oder Metalloxid-Mischungen als Festbettkatalysatoren im Polymerisationsreaktor den Molekulargewichtsaufbau, verglichen mit Festbettkatalysator-freier Fahrweise, deutlich beschleunigt, und die Polymerisation vorteilhaft bei verringerter Temperatur und verringertem Wassergehalt durchgeführt werden kann.

Die Reaktionsmischung wird dabei vor oder nach Erreichen der gewünschten Endviskosität vom Katalysatormaterial abgetrennt.

Zur erfindungsgemäßen Herstellung von Polyamid können sämtliche bekannten Monomere in Gegenwart der erfindungsgemäßen Katalysatoren polymerisiert werden. In einer bevorzugten Ausführungsform des erfindungsgemäßen Verfahrens wird als Ausgangsmonomer E-Caprolactam eingesetzt. In der nachstehenden Beschreibung bedeutet "Caprolactam" vorzugsweise "ε-Caprolactam".

Als Katalysatoren zur heterogenen Katalyse können bekannte Metalloxide, wie Zirkonoxid, Aluminiumoxid, Magnesiumoxid, Ceroxid, Lanthanoxid und bevorzugt Titandioxide wie auch Beta-Zeolithe und Schichtsilikate eingesetzt werden. Besonders bevorzugt ist Titandioxid in der sogenannten Anatas-Modifikation. Vorzugsweise liegt das Titandioxid zu mindestens 70 Gew.-%, besonders bevorzugt mindestens 90%, insbesondere im wesentlichen vollständig in der Anatas-Modifikation vor. Des weiteren wurde gefunden, daß auch Kieselgel, Zeolithe und dotierte Metalloxide, wobei zum Beispiel Ruthenium, Kupfer oder Fluorid zur Dotierung eingesetzt werden, die Umsetzung der genannten Edukte deutlich verbessern. Geeignete Katalysatoren zeichnen sich insbesondere dadurch aus, daß sie Brönsted-sauer sind. Erfindungsgemäß weist der heterogene Katalysator eine makroskopische Form auf, die eine mechanische Abtrennung der Polymerschmelze vom Katalysator, beispielsweise durch Siebe oder Filter, ermöglicht. Vorgeschlagen wird der Katalysator-Einsatz in Strang- oder Granulat-Form oder als Beschichtung auf Füllkörpern.

In einer anderen Ausfuhrungsform wird das Lactam mit homogen gelösten sauren Cokatalysatoren oder einem Gemisch aus verschiedenen katalytisch wirkenden Verbindungen in Gegenwart der oben genannten Heterogenkatalysatoren umgesetzt. Als Cokatalysatoren werden hierbei bevorzugt saure Katalysatoren, ausgewählt aus organischen Mono- oder Dicarbonsäuren, anorganischen Säuren, deren Salzen oder Gemischen davon, z.B. die oben genannten Carbonsäuren, Terephthalsäure, Adipinsäure, Propionsäure und Isophthalsäure, oder sauerstoffhaltige Phophorverbindungen, insbesondere Phosphorsäure, phosphorige Säure, hypophosphorige Säure, deren Alkalimetall- und Erdalkalimetallsalze und Ammoniumsalze, oder sauerstoffhaltige Schwefelverbindungen, insbesondere Schwefelsäure und schwefelige Säure eingesetzt.

Das erfindungsgemäße Verfahren wird diskontinuierlich oder bevorzugt kontinuierlich durchgeführt. Die Monomere werden mit den gewünschten Comonomeren, den Kettenreglern und den Katalysatoren entweder im Polymerisationsreaktor, bevorzugt vor dem Aufheizen auf die Reaktionstemperatur, oder vor dem Einleiten in den Reaktor in einem separaten Ansatzkessel aufgeschmolzen und vermischt. Der Wassergehalt der Eduktmischung beträgt 0 bis 20 Gew.-%, bevorzugt 0 bis weniger als 10 Gew.-% und besonders bevorzugt 0.005 bis 1 Gew.-%.

Die erfindungsgemäße Durchführung des Verfahrens kann durch Temperatur-Zeit- und Druck-Zeit-Profile, die von den eingesetzten Reaktanden und Katalysatoren abhängen, charakterisiert werden. Die Zeitabhängigkeit der Druck- und Temperaturwerte hängt hierbei direkt vom Reaktionsfortschritt, von der gewünschten Molekulargewichtsverteilung bzw. der Viskosität des Endproduktes und von der abzuscheidenden Wassermenge in der Reaktionsmischung ab.

Es wurde gefunden, daß der Molekulargewichtsaufbau verbessert werden kann. wenn das Reaktionsgemisch mehrere Verfahrensphasen bzw -stufen mit jeweils unterschiedlicher Verfahrensparametereinstellung (Druck, Temperatur und Verweildauer) sequentiell durchlauft Die zeitlichen Druck- und Temperaturverlaufe innerhalb und zwischen den Phasen sind nicht notwendigerweise konstant bzw. sprunghaft, sondern können sich auch monoton bzw. kontinuierlich ändern.

### Zweiphasiges Verfahren

Bevorzugt wird die Polymerisation in mindestens zwei Phasen bzw. Stufen durchgefiihrt, wobei in der ersten Stufe unter einem erhöhten Druck gearbeitet wird, bei dem das Reaktionsgemisch mit Ausnahme des Heterogenkatalysators einphasig-flüssig vorliegt, und in der letzten Stufe vorzugsweise unter einem Druck im Bereich von 0,01 bis 10 x 10⁵ Pa nachkondensiert wird, wobei der Heterogenkatalysator in einer oder beiden Stufen vorliegen kann. Dabei wird das Reaktionsgemisch nach dem Aufheizen auf die gewünschte Reaktionstemperatur in der ersten Phase bei erhöhten und in der zweiten Phase bei niedrigen Drücken umgesetzt. Die Niederdruckphase gewährleistet hierbei die Abtrennung der entstehenden Kondensationsprodukte. Die Phasen können technisch in einem Reaktor realisiert werden. Soll die Umsetzung des Reaktionsgemisches in Gegenwart des Festbettkatalysators ausschließlich in einer Herstellphase erfolgen, so wird die räumliche Trennung der Phasen vorgeschlagen.

Sollen die Herstellphasen getrennt sein, so wird der Metalloxid-Katalysator bevorzugt in der ersten Herstellphase eingesetzt, da die Reaktionsmischung während der ersten Phase vergleichsweise niederviskos ist, was eine effektivere Trennung der entstandenen Präpolymerschmelze vom Katalysator ermöglicht. Die notwendige Trennung des umgesetzten Reaktionsgemisches vom Festbettkatalysator erfolgt in diesem Fall zum Beispiel durch das Uberführen der Reaktionsmischung in einen zweiten Reaktor, der keinen Festbettkatalysator enthält. Vorteilhaft an dieser Ausführungsform ist der gute Kontakt des Reaktanden mit der Katalysatorobertlache.

In einer anderen Verfahrensweise liegt das Reaktionsgemisch in der ersten Herstellungsphase zweiphasig gasförmig-flüssig in einem geschlossenen Reaktor vor. Das vorhandene Gasvolumen kann nicht ausgetauscht werden, so daß der Molekulargewichtsaufbau durch den vorgegebenen Wassergehalt in der Polymerschmelze und das Gasvolumen beschränkt ist. Bevorzugt findet vor den nachfolgenden Phasen, insbesondere vor der Nachkondensation des Produktes, eine Trennung der

Reaktionsmischung vom Festbettkatalysator statt, zum Beispiel durch das Überführen des Zwischenproduktes in ein katalysatorfreies Reaktorvolumen.

Es wurde gefunden, daß ein hohes Molekulargewicht bei der Herstellung von Polyamid erreicht werden kann, wenn die Lactame mit weniger als 1 Gew.-% Wasser in Gegenwart des Katalysators polymerisiert werden. Vorteilhaft ist in diesem Fall wiederum die Trennung der Prapolymerschmelze vom Festbettkatalysator vor der Polykondensation - bei geringen Drucken - auf die gewünschte Endviskosität Als bevorzugte Herstellungsweise bei der Herstellung von Polyamiden mit sehr wenig Wasser wird vorgeschlagen, die erste Phase der Polymerisation bei erhöhtem Druck in einem geschlossenen System einphasig-flüssig oder zweiphasig gasförmig-flüssig, das heißt ohne die Abtrennung von Kondensationsprodukten, und die nachfolgenden Phasen bei geringen Drucken - zur Nachkondensation - durchzuführen.

Wird die Reaktionsmischung in Gegenwart des Festbettkatalysators umgesetzt, so beträgt die Massetemperatur der Mischung vorzugsweise 190 bis 300 °C, bevorzugt 220 bis 290°C und besonders bevorzugt 230 bis 280 °C. Hierbei hängt die Temperaturuntergrenze auch vom Polymerisationsgrad und vom Wassergehalt der

Schmelze ab, da ein flüssig-fest-Phasenubergang auf jeden Fall vermieden werden soll. In Abwesenheit des Festbettkatalvsators beträgt die Massetemperatur vorzugsweise 220 bis 350°C, bevorzugt 240 bis 290°C und besonders bevorzugt 260 bis 280°C.

Die verwendeten Reaktionsgefäße werden derart mit dem Katalysatormaterial gefüllt, daß eine möglichst große Katalysatoroberfläche sämtlichen Volumenelementen der Reaktionslösung zur Verfügung steht. Gewünschtenfalls kann die Reaktionsmischung umgepumpt werden, um den Austausch der Reaktanden an der Katalysatoroberfläche zu verbessern.

Wie die nachfolgenden Beispiele zeigen, kann selbst ohne Nachkondensation, das heißt mit nur einer Herstellungsphase, im geschlossenen Reaktionssystem eine für viele Anwendungen ausreichende Viskosität erreicht werden.

### Dreiphasiges Verfahren

In einer anderen bevorzugten Ausführungsform erfolgt die Umsetzung der Reaktionsmischung in drei Phasen. Hierbei folgt einer ersten Hochdruckphase, in der die Reaktanden einphasig-flüssig vorliegen, eine zweiphasige Hochdruckphase im offenen Reaktor, der die Abtrennung von Kondensationsprodukten ermöglicht. In einer dritten Niederdruckphase wird schließlich der angestrebte Polymerisationsgrad durch Nachkondensation und effiziente Wasserabtrennung erreicht.

Sämtliche oben beschriebenen Herstellphasen können auch bei dieser Ausführungsform in einem Reaktor realisiert werden. Vorzugsweise wird die Reaktionsmischung für die Phase der Nachkondensation bei niedrigen Drücken in ein Reaktorvolumen überführt, das katalysatorfrei ist. Die Abtrennung des Katalysators erfolgt mechanisch, zum Beispiel durch den Einsatz von Filtern, Gittern und/oder Sieben.

In der letzten sogenannten Nachkondensationsphase des mehrphasigen Herstellungsprozesses wird das Reaktionsgemisch bzw. die Präpolymerschmelze bei Drücken vorzugsweise im Bereich von 0,01 bis 10 x 10⁵ Pa, besonders bevorzugt zwischen 10 und 300 x 10³ Pa nachkondensiert. Gewünschtenfalls kann Inertgas über das Produktgemisch geleitet werden. Die Dauer der somit eingeleiteten Nachkondensationsphase bestimmt dann den Polymerisationsgrad der entstandenen Polyamid-Schmelze und beträgt - abhängig vom Wassergehalt der Reaktionsmischung - zwischen 0 und 10 Stunden. Für sehr hochviskose Polyamide können Nachkondensationsdauern von mehr als 10 Stunden notwendig sein.

Es ist möglich, die Nachkondensation in Anwesenheit der Katalysatormischung ablaufen zu lassen. Es wurde gefunden, daß die Trennung von Katalysator und Reaktionsmischung vor der Nachkondensationsphase die Katalysatorstandzeit erhöht. Vorzugsweise wird deshalb das Reaktionsgemisch vor der Entspannung auf niedrige Drücke in einen katalysatorfreien Reaktor überführt, wobei der Katalysator durch den Einsatz von Sieben, Gittern und/oder Filtern, deren Filtergrenze 20 µm beträgt, zurückgehalten und somit von der Reaktionsmischung getrennt wird.

Im Rahmen des erfindungsgemäßen Verfahrens kann auch eine Kettenverlängerung oder eine Verzweigung oder eine Kombination aus beiden durchgeführt werden. Dazu werden bekannte Substanzen zur Verzweigung oder zur Kettenverlängerung von Polymeren dem Reaktionsgemisch zugesetzt. Die Substanzen können sowohl dem Ausgangsgemisch als auch dem Reaktionsgemisch, welches nachkondensiert wird, zugesetzt werden. Als einsetzbare Substanzen sind zu nennen:

Trifunktionelle Amine oder Carbonsäuren als Verzweiger bzw. Vernetzer. Beispiele geeigneter mindestens trifunktioneller Amine oder Carbonsäuren sind in der EP-A-0 345 648 beschrieben. Die mindestens trifunktionellen Amine weisen mindestens drei Aminogruppen auf, die zur Umsetzung mit Carbonsauregruppen fähig sind Sie weisen vorzugsweise keine Carbonsauregruppen auf Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf Beispiele geeigneter Carbonsäuren sind Trimesinsäure, trimerisierte Fettsäuren, die beispiels-weise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin. Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂-N(CH₂)ₓ-N((CH₂)ₙ-NR₂)₂ (I)

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3'5'-Biphenyltetracarbonsäure-Phthalocyanin, Naphthalocyanin, 3,5,5',5'-Biphenyltetracarbonsäure, 1,3,5,7-Naphthalintetracarbonsäure, 2.4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit

Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Laromin. Verzweigte aliphatische Diamine sind ebenfalls verwendbar, ein Beispiel ist Vestamin TMD (Trimethyl-hexamethylendiamin, hergestellt von der Hüls AG). Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsaure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Der Reaktionsmischung können Zusatz- und Füllstoffe, aliphatische und aromatische Kettenregler wie mono- und bifunktionelle Amine und Säure sowie Substanzen zur Hitze- und Photostabilisierung und zur Verbesserung der Anfärbbarkeit des Polymers zugesetzt werden. Bevorzugt werden die Stoffe, die nicht homogen in der Reaktionsmischung gelöst sind, wie Pigmente und Füllstoffe, der Reaktionsmischung nach den Herstellungsphasen, die in Gegenwart des Festbettkatalysators ablaufen, zugeführt.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. mit Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Die erfindungsgemäß erhaltenen Polyamide, insbe-/sondere Polyamid 6 und dessen Copolymere, kann man zur Herstellung von Fasern bzw. Flächengebilden und Werkstoffen verwenden. Entsprechende Verfahren sind beispielsweise in EP-A-0 462 476 beschrieben.

In einer bevorzugten Ausführungsform kann man den Gehalt an niedermolekularen Bestandteilen wie Caprolactam, linearen und cyclischen Oligomeren im erfindungsgemäß hergestellten Polyamid reduzieren, indem man das Polyamid zuerst mit einer wäßrigen Lösung von Caprolactam und anschließend mit Wasser extrahiert und/oder der Gasphasenextraktion unterwirft.

Die Erfindung wird nachstehend durch Beispiele näher erläutert.

### Beispiele

Die Beispiele vergleichen die Polymerisation von Caprolactam bei einphasiger Verfahrensweise im geschlossenen Reaktor und bei zweiphasiger Fahrweise mit zusätzlicher Entspannungsphase im offenen Reaktor in Gegenwart eines Festbettkatalysators mit den analogen Polymerisationen ohne Festbettkatalysator. Herstellverfahren mit verschiedenen Temperatur-, Verweilzeitprofilen sowie mit hohem und geringen Wasseranteil in der Eduktmischung werden gegenübergestellt.

### Analytik

Die sogenannte relative Viskositat (RV) als Maß für den Molekulargewichtsaufbau und Polymerisationsgrad wird in 1 Gew.-%iger Lösung bei extrahiertem Material und in 1.1 Gew.-%iger Lösung bei unextrahiertem Polymer in 96%iger Schwefelsäure bei 25°C mittels Viskosimeter nach Ubbelohde bestimmt. Unextrahierte Polymere werden vor der Analyse 20 Stunden im Vakuum getrocknet.

Die Bestimmung des Amino- und Carboxylendgruppengehalts erfolgte am extrahierten Polycaprolactam und wurde als acidimetrische Titration durchgeführt. Die Aminogruppen wurden in Phenol/Methanol 70:30 (Gew.-Teile) als Lösungsmittel mit Perchlorsäure titriert. Die Carboxylendgruppen wurden in Benzylalkohol als Lösungsmittel mit Kalilauge titriert.

Zur Extraktion werden 100 Gew.-Teile Polycaprolactam mit 400 Gew.-Teilen vollentsalztem Wasser von 100°C für eine Dauer von 32 Stunden unter Rückfluß gerührt bzw. extrahiert und nach Entfernen des Wassers milde, das heißt ohne die Gefahr einer Nachkondensation, bei einer Temperatur von 100°C für eine Zeitdauer von 20 Stunden im Vakuum getrocknet.

### Katalysator

Zur heterogenen Katalyse wird Titandioxid in Strangform mit einem Durchmesser von 4 mm und einer Länge zwischen 5 und 20 mm eingesetzt. Das Titandioxid des Katalysators liegt vollständig in der Anatas-Modifikation vor. (Finnti, Typ S150)

### Herstellung im Batch-Kessel: Beispiele 1 - 8

Die Versuche werden im Autoklaven mit und ohne Katalysatorgranulat durchgeführt, wobei die Granulatschüttung die Reaktionsmischung, die 10 Gew.-% Wasser enthält, vollständig bedeckt. Nach dem Einfüllen der Reaktanden und gegebenenfalls des Katalysators wird der Autoklav verschlossen, entlüftet und mehrmals mit Stickstoff gespült. Der Aufheizphase auf die gewünschte Reaktionstemperatur bei einem Druck von bis zu 18 bar, manuell geregelt mit Hilfe eines Ventils, folgt die Entspannungsphase des Autoklaven auf Umgebungsdruck (ca. 1 bar), so daß die entstandene Präpolymerschmelze nachkondensieren kann. Die Temperaturen, Drücke sowie die Beschreibung der Fahrweisen sind in Tabelle 1 aufgelistet. Variiert werden sowohl die Nachkondensations- und Entspannungsdauern als auch die Reaktionstemperaturen.

**Tabelle 1:**

| **Beispielversuche im Batch-Kessel** | |
|---|---|
| **Fahr- weisen** | **Caprolactam im Autoklaven ....** |
| A | ... **mit 10 Gew.-% H**_{**2**}**O** innerhalb von 85 min. auf **270°C** erhitzt, Druck durch Entspannen bei 18 bar gehalten, in **60 min** auf 1 bar entspannt und **1 Stunde** bei 270°C und 1 bar nachkondensiert. |
| B | ... **mit 10 Gew.-% H**_{**2**}**O** innerhalb von 85 min. auf **270°C** erhitzt, Druck durch Entspannen bei 18 bar gehalten, in **60 min** auf 1 bar entspannt, und Autoklaven **ohne Nachkondensation** ausgefahren. |
| C | ... **mit 10 Gew.-% H**_{**2**}**O** innerhalb von 85 min. auf **270°C** erhitzt. Druck durch Entspannen bei 18 bar gehalten, in **20 min** auf 1 bar entspannt und Autoklaven **ohne Nachkondensation** entleert. |
| D | ... **mit 10 Gew.-% H**_{**2**}**O** innerhalb von 85 min. auf **die gewünschte Reaktionstemperatur T** erhitzt. Druck durch Entspannen bei 18 bar gehalten, in **60** min auf 1 bar entspannt und Autoklaven **ohne Nachkondensation** entleert. |
| E | ... **mit 0,4 Gew.-% H**_{**2**}**O** innerhalb von 85 **min**. auf **270°C** erhitzt, Druck durch Entspannen bei 18 bar gehalten, in **60 min** auf 1 bar entspannt, und Autoklaven **ohne Nachkondensation** ausgefahren. |

Die Tabellen fassen die Produkteigenschaften des Polymers in Abhängigkeit von der Fahrweise zusammen. Die Experimente mit unterschiedlicher Reaktionszeit sind in Tabelle 2 und die bei unterschiedlicher Reaktionstemperatur in Tabelle 3 aufgelistet. Tabelle 1 beschreibt die Fahrweisen des Laborautoklaven.

**Tabelle 2:**

| **Hydrolytische Polymerisation von Caprolactam in Gegenwart des Titandioxid-Katalysators. Variation der Reaktionszeiten** | | | | | |
|---|---|---|---|---|---|
| **Beispiel/ Vergleichsbsp.** | **Katalysator** | **Fahrweise (s. Tab. 1)** | **RV** | **AEG** | **CEG** |
| 1 | mit | A | 2,38 | 83 | 32 |
| Vergleich V 1 | ohne | A | 2,38 | 67 | 68 |
| 2 | mit | B | 1,98 | 96 | 79 |
| Vergleich V 2 | ohne | B | 1,86 | 111 | 106 |
| 3 | mit | C | 2,01 | 99 | 87 |
| Vergleich V 3 | ohne | C | 1,74 | 136 | 131 |
| **RV: relative Viskosität** | | | | | |
| **AEG: Aminoendgruppengehalt** | | | | | |
| **CEG: Carboxylendgruppengehalt** | | | | | |

Die Beispiele zeigen einen deutlich stärkeren Anstieg der Viskosität mit zunehmender Reaktionsdauer, wenn die Polymerisation in Gegenwart eines Festbettkatalysators durchgeführt wird. Zudem können selbst bei einer Reaktionstemperatur von nur 230 °C mit Hilfe des Katalysators hohe Produktviskositäten erreicht werden (siehe Tabelle 3).

**Tabelle 3:**

| **Hydrolytische Polymerisation von Caprolactam in Gegenwart des Titandioxid-Katalysators. Variation der Reaktionstemperatur** | | | | | | |
|---|---|---|---|---|---|---|
| **Beispiele/ Vergleichsbsp.** | **Katalysator** | **Fahrweise (s. Tab. 1)** | **T [°C]** | **RV** | **AEG** | **CEG** |
| 4 | mit | D | 270 | 1,98 | 96 | 79 |
| Vergleich V 4 | ohne | D | 270 | 1,86 | 111 | 106 |
| 5 | mit | D | 250 | 1,94 | 103 | 91 |
| Vergleich V 5 | ohne | D | 250 | 1,78 | 127 | 124 |
| 6 | mit | D | 230 | 1,92 | 106 | 103 |
| Vergleich V 6 | ohne | D | 230 | 1,60 | 171 | 165 |
| 7 | mit | D | 210 | 1,70 | 138 | 130 |
| Vergleich V 7 | ohne | D | 210 | 1.00 | - | - |
| 8 | mit | E | 250 | 2,73 | 40 | 80 |
| Vergleich V 8 | ohne | E | 250 | 1.05 | - | - |

### Experimente im geschlossenen Reaktor: Beispiele 9 - 16.

Caprolactam wird zusammen mit 50 Gew.-% TiO₂-Granulat und 0,6 Gew.-% Wasser, jeweils bezogen auf die eingesetzte Monomermasse, in einen Glasreaktor gefüllt, der anschließend unter Stickstoffabdeckung verschlossen wird. Die Reaktionsmischung beansprucht zusammen mit dem Festbettkatalysator ca. 2/3 des Reaktorvolumens. Der auf die gewählte Massetemperatur der Reaktionsmischung erhitzte Reaktor wird nach Reaktionszeiten von 2, 4, 8 oder 16 Stunden innerhalb weniger Minuten abgekühlt und entleert. Das erhaltene Polymer wird anschließend granuliert und analysiert.

Die Abhängigkeit der relativen Produktviskosität von der Reaktionszeit, aufgelistet in den Tabellen 4 und 5, macht deutlich, daß die Polymerisation in Gegenwart eines Festbett-Metalloxidkatalysators stark beschleunigt wird.

**Tabelle 4:**

| **Hydrolytische Polymerisation von Caprolactam in Gegenwart des Titandioxid-Katalysators im geschlossenen Reaktor bei 230 °C. Variation der Reaktionsdauer** | | | | |
|---|---|---|---|---|
| **Beispiele/ Vergleichsbsp.** | **Katalysator** | **Reaktions- zeit** | **T [°C]** | **RV** |
| 9 | mit | 2 | 230 °C | 1.68 |
| Vergleich V 9 | ohne | 2 | 230 °C | 1.02 |
| 10 | mit | 4 | 230 °C | 2.08 |
| Vergleich V 10 | ohne | 4 | 230 °C | 1.02 |
| 11 | mit | 8 | 230 °C | 2.40 |
| Vergleich V 11 | ohne | 8 | 230 °C | 1.18 |
| 12 | mit | 16 | 230 °C | 2.40 |
| Vergleich V 12 | ohne | 16 | 230 °C | 2.29 |

**Tabelle 5:**

| **Hydrolytische Polymerisation von Caprolactam in Gegenwart des Titandioxid-Katalysators im geschlossenen Reaktor bei 250 °C. Variation der Reaktionsdauer** | | | | |
|---|---|---|---|---|
| **Beispiele/ Vergleichsbsp.** | **Katalysator** | **Reaktions- zeit** | **T [°C]** | **RV** |
| 13 | mit | 2 | 250 °C | 1.97 |
| Vergleich V 13 | ohne | 2 | 250 °C | 1.02 |
| 14 | mit | 4 | 250 °C | 2.10 |
| Vergleich V14 | ohne | 4 | 250 °C | 1.21 |
| 15 | mit | 8 | 250 °C | 2.15 |
| Vergleich V 15 | ohne | 8 | 250 °C | 2.16 |
| 16 | mit | 16 | 250 °C | 2.15 |
| Vergleich V 16 | ohne | 16 | 250°C | 2.51 |

## Patentansprüche

1. Verfahren zur Herstellung von Polyamiden durch Polymerisation von Lactamen in Gegenwart von Metalloxiden als Heterogen-Katalysatoren, **dadurch gekennzeichnet, daß** die Metalloxide in Form von Granulaten, Strängen, Festbetten oder mit Katalysator beschichteten Füllkörpern oder Einbauten eingesetzt werden, die die mechanische Abtrennung aus dem Reaktionsgemisch erlauben, und im Verlauf oder nach Ende der Polymerisation aus dem Reaktionsgemisch entfernt werden.

2. Verfahren nach Anspruch 1, **dadurch gekennzeichnet, daß** die Metalloxid-Katalysatoren ausgewählt sind aus Zirkonoxid, Aluminiumoxid, Magnesiumoxid, Ceroxid, Lanthanoxid, Titandioxid, Beta-Zeolithen und Schichtsilikaten.

3. Verfahren nach Anspruch 2, **dadurch gekennzeichnet, daß** als Metalloxid-Katalysator Titandioxid eingesetzt wird, das zu mindestens 70 Gew.-% in der Anatasmodifikation vorliegt

4. Verfahren nach einem der Ansprüche 1 bis 3, **dadurch gekennzeichnet, daß** die Metalloxid-Katalysatoren zusammen mit im Reaktionsgemisch homogen gelösten sauren Cokatalysatoren eingesetzt werden.

5. Verfahren nach Anspruch 4, **dadurch gekennzeichnet, daß** die sauren Cokatalysatoren ausgewählt sind aus organischen Mono- und Dicarbonsäuren, anorganischen Säuren, deren Salzen oder Gemischen davon.

6. Verfahren nach einem der Ansprüche 1 bis 5, **dadurch gekennzeichnet, daß** die Polymerisation der Lactame in Gegenwart von organischen Monocarbonsäuren, Dicarbonsäuren oder deren Gemischen als Kettenreglern und/oder Cokatalysatoren durchgeführt wird.

7. Verfahren nach einem der Ansprüche 1 bis 6, **dadurch gekennzeichnet, daß** die Polymerisation in mindestens zwei Stufen erfolgt, wobei in der ersten Stufe unter einem erhöhten Druck gearbeitet wird, bei dem das Reaktionsgemisch mit Ausnahme des Heterogenkatalysators einphasig-flüssig vorliegt, und in der letzten Stufe unter einem Druck im Bereich von 0,01 bis 10 x 10⁵ Pa nachkondensiert wird, wobei der Heterogenkatalysator in einer oder beiden Stufen vorliegen kann.

8. Verfahren nach Anspruch 7, **dadurch gekennzeichnet, daß** die Umsetzung in Gegenwart des Heterogen-Katalysators bei einer Temperatur im Bereich von 190 bis 300°C und bei Abwesenheit des Heterogen-Katalysators bei einer Temperatur im Bereich von 220 bis 350°C durchgeführt wird.

9. Verfahren nach einem der Ansprüche 1 bis 8, **dadurch gekennzeichnet, daß** die Umsetzung in Gegenwart von weniger als 10 Gew.-% Wasser, bezogen auf das gesamte Reaktionsgemisch, durchgeführt wird.

## Claims

1. A process for producing polyamides by polymerization of lactams in the presence of metal oxides as heterogeneous catalysts, which comprises the metal oxides being used in the form of pellets, extrudates, fixed beds or catalyst-coated packing elements or internals, which permit mechanical removal from the reaction mixture and being removed from the reaction mixture during or after the polymerization.

2. A process as claimed in claim 1, wherein the metal oxide catalysts are selected from zirconium oxide, aluminum oxide, magnesium oxide, cerium oxide, lanthanum oxide, titanium dioxide, beta-zeolites and sheet-silicates.

3. A process as claimed in claim 2, wherein the metal oxide catalyst used is titanium dioxide which is at least 70% by weight in the anatase form.

4. A process as claimed in any of claims 1 to 3, wherein the metal oxide catalysts are used together with acidic cocatalysts in homogeneous solution in the reaction mixture.

5. A process as claimed in claim 4, wherein the acidic cocatalysts are selected from organic monosalts or mixtures thereof.

6. A process as claimed in any of claims 1 to 5, wherein the polymerization of the lactams is carried out in the presence of organic monocarboxylic acids, dicarboxylic acids or their mixtures as chain regulators and/or cocatalysts.

7. A process as claimed in any of claims 1 to 6, wherein the polymerization is carried out in at least two stages, the first stage being carried out under an elevated pressure at which the reaction mixture (except for the heterogeneous catalyst) is present as a single liquid phase and the last stage being carried out as a postcondensation under a pressure within the range from 0.01 to 10 x 10⁵ Pa, and the heterogeneous catalyst may be present in either or both of the stages.

8. A process as claimed in claim 7, wherein the reaction is carried out at a temperature within the range from 190 to 300°C when the heterogeneous catalyst is present and at a temperature within the range from 220 to 350°C when the heterogeneous catalyst is absent.

9. A process as claimed in any of claims 1 to 8, wherein the reaction is carried out in the presence of less than 10% by weight of water, based on the entire reaction mixture.

## Revendications

1. Procédé de préparation de polyamides par polymérisation de lactames en présence d'oxydes métalliques en tant que catalyseurs hétérogènes, **caractérisé en ce que** les oxydes métalliques sont mis en oeuvre sous la forme de granulés, granulés cylindriques, lits fluidisés, ou bien d'inserts ou de corps de remplissage recouverts de catalyseur, permettant la séparation mécanique du mélange réactionnel, et qui sont évacués du mélange réactionnel pendant ou après la fin de la polymérisation.

2. Procédé selon la revendication 1, **caractérisé en ce que** les catalyseurs d'oxyde métallique sont choisis parmi l'oxyde de zirconium, l'oxyde d'aluminium, l'oxyde de magnésium, l'oxyde de cérium, l'oxyde de lanthane, le dioxyde de titane, des bêta-zéolithes et des silicates stratifiés.

3. Procédé selon la revendication 2, **caractérisé en ce que** l'on utilise comme catalyseur d'oxyde métallique du dioxyde de titane se trouvant à au moins 70% en poids dans la forme d'anatase.

4. Procédé selon l'une des revendications 1 à 3, **caractérisé en ce que** les catalyseurs d'oxyde métallique sont mis en oeuvre avec des cocatalyseurs acides dissous de manière homogène dans le mélange réactionnel.

5. Procédé selon la revendication 4, **caractérisé en ce que** les cocatalyseurs acides sont choisis parmi des acides organiques mono- et dicarboxyliques, des acides inorganiques, leurs sels, ou leurs mélanges.

6. Procédé selon l'une des revendications 1 à 5, **caractérisé en ce que** la polymérisation des lactames est entreprise en présence d'acides organiques monocarboxyliques, dicarboxyliques, ou leurs mélanges, en tant que régulateurs de chaîne et/ou cocatalyseurs.

7. Procédé selon l'une des revendications 1 à 6, **caractérisé en ce que** la polymérisation se fait en au moins deux étapes, où dans la première étape on travaille à une pression supérieure, à laquelle le mélange réactionnel est une unique phase liquide à l'exception du catalyseur hétérogène, et dans la dernière étape on opère une post-condensation sous une pression de l'ordre de 0,01 à 10 x 10⁵ Pa, le catalyseur hétérogène pouvant être présent dans l'une ou les deux étapes.

8. Procédé selon la revendication 7, **caractérisé en ce que** la réaction est entreprise en présence du catalyseur hétérogène à une température de l'ordre de 190 à 300°C, et en l'absence de catalyseur hétérogène à une température de l'ordre de 220 à 350°C.

9. Procédé selon l'une des revendications 1 à 8, **caractérisé en ce que** la réaction est entreprise en présence de moins de 10% en poids d'eau, par rapport à l'ensemble du mélange réactionnel.
